# FASCICULE DE BREVET EUROPEEN

(11) **EP 2 249 962 B1**
(45) Date de publication et mention de la délivrance du brevet: **25.04.2012**
(21) Numéro de dépôt: 09721476.1
(22) Date de dépôt: 17.02.2009
(51) Int. Cl.: B01J 20/26, B01J 31/04, B01J 35/00, C07F 5/00, B01J 31/16

(54) **NOUVEAU MATERIAU HYBRIDE ORGANIQUE-INORGANIQUE IM-19 ET SON PROCEDE DE PREPARATION**
NEUES ORGANISCH-ANORGANISCHES HYBRIDMATERIAL IM-19 UND HERSTELLUNGSVERFAHREN DAFÜR
NOVEL HYBRID ORGANIC-INORGANIC MATERIAL IM-19 AND METHOD FOR PREPARING SAME

(30) Priorité: 27.02.2008 FR 0801089; 07.10.2008 FR 0805540
(43) Date de publication de la demande: 17.11.2010
(73) Titulaire: IFP Energies nouvelles, 92852 Rueil-Malmaison Cedex (FR)
(72) Inventeur: CHAPLAIS, Gèrald, F-68200 Mulhouse (FR); SIMON-MASSERON, Angélique, F-68350 Brunstatt (FR); PATARIN, Joël, F-68720 Flaxlanden (FR); BATS, Nicolas, F-69320 Feysin (FR); BAZER-BACHI, Delphine, F-69230 Saint-Genis Laval (FR)
(86) Numéro de dépôt international: PCT/FR2009/000177
(87) Numéro de publication internationale: WO 2009/115683

(56) Documents cités:
- EP-A- 1 674 555
- VOLKRINGER ET AL: "Synthesis, crystal structure and <71>Ga solid state NMR of a MOF-type gallium trimesate (MIL-96) with mu3-oxo bridged trinuclear units and a hexagonal 18-ring network" MICROPOROUS AND MESOPOROUS MATERIALS, ELSEVIER SCIENCE PUBLISHING, NEW YORK, US, vol. 105, no. 1-2, 7 septembre 2007 (2007-09-07), pages 111-117, XP022235373 ISSN: 1387-1811
- LOISEAU T ET AL: "A Rationale for the Large Breathing of the Porous Aluminum Terephthalate (MIL-53) Upon Hydration" CHEMISTRY - A EUROPEAN JOURNAL, WILEY - V C H VERLAG GMBH & CO. KGAA, WEINHEIM, DE, vol. 10, no. 6, 15 mars 2004 (2004-03-15), pages 1373-1382, XP002456416 ISSN: 0947-6539 cité dans la demande

## Description

### Domaine technique de l'invention

L'invention concerne un nouveau matériau hydride à matrice mixte organique-inorganique cristallisé appelé ci-après IM-19, à son procédé de préparation, ainsi qu'à son utilisation comme catalyseur ou adsorbant.

### Art antérieur

La famille des solides poreux, d'une importance incontestable autant dans des applications de la vie courante qu'industrielles, suscite encore et toujours un intérêt majeur dans les travaux de recherche réalisés dans le domaine des matériaux.

Les solides poreux inorganiques ont largement été étudiés afin d'accroître l'ouverture de leurs structures de façon à faciliter l'accès des réactifs vers le site actif ou le départ des produits depuis ce site actif.

Depuis les années 1990, un intérêt particulier s'est manifesté pour des composés hybrides à matrice mixte organique-inorganique, portant ainsi le nombre de groupes distinguant les types de matériaux poreux à 3 : les matériaux inorganiques, les matériaux carbonés et les matériaux hybrides aussi appelés polymères de coordination.

Ces polymères de coordination, dont les premiers ont été décrits dans les années 1960, font l'objet d'un nombre croissant de publications. En effet, l'effervescence autour de ces matériaux a permis d'atteindre une diversité structurale déjà avancée en peu de temps (Férey G., l'actualité chimique, janvier 2007, n°304).

Conceptuellement, les solides hybrides poreux à matrice mixte organique-inorganique sont assez semblables aux solides poreux à squelette inorganique.

Comme ces derniers, ils associent des entités chimiques en donnant naissance à une porosité. La principale différence réside dans la nature de ces entités. Cette différence est particulièrement avantageuse et donne toute leur versatilité à cette catégorie de solides. En effet, la taille des pores devient, par l'utilisation de ligands organiques, ajustable par le biais de la longueur de la chaîne carbonée. La charpente, qui dans le cas des matériaux poreux inorganiques, ne pouvait accepter que quelques éléments (Si, Al, Ge, Ga, éventuellement Zn) peut, dans ce cas, utiliser tous les cations (sauf les alcalins). Pour ces matériaux, aucun agent structurant spécifique n'est requis, le solvant joue cet effet à lui seul.

Il apparaît donc clairement que cette classe de matériaux permet une multiplicité de structures et par conséquent des solides finement adaptés aux applications qu'on leur destine.

Les polymères de coordination sont constitués de deux éléments appelés connecteurs et ligands dont l'orientation et le nombre des sites de liaisons sont déterminants dans la structure du matériau hybride. De la diversité de ces ligands et connecteurs naît, comme on l'a déjà précisé, une immense variété de matériaux hybrides. D'autres composés additionnels auxiliaires entrent également dans la synthèse : il s'agit des bloquants, contre-ions, par exemple.

Par ligand, on désigne la partie organique du matériau hybride. Ces ligands sont, le plus souvent, des di- ou tri-carboxylates ou des dérivés de la pyridine. Quelques ligands organiques fréquemment rencontrés sont représentés ci-après : bdc = benzene-1,4-dicarboxylate, btc = benzene-1,3,5-tricarboxylate, ndc = naphtalene-2,6-dicarboxylate, bpy = 4,4'-bipyridine, hfipbb = 4,4'-(hexafluororisopropylidene)-bisbenzoate, cyclam = 1,4,8,11-tetraazacyclotetradecane.

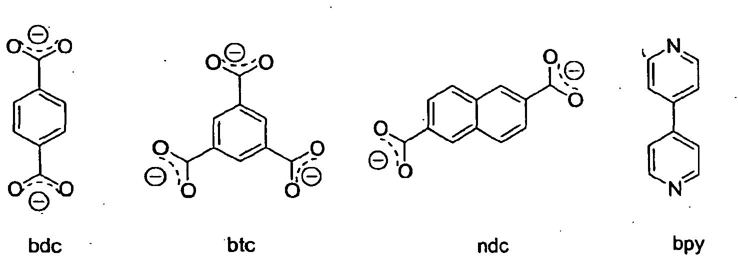

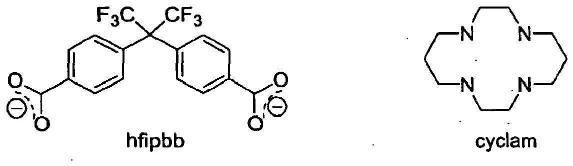

L'entité inorganique jouant le rôle de connecteur est, quant à elle, un cation seul, un dimère, trimère ou tétramère ou encore une chaîne, un plan, voire un réseau tridimensionnel.

Les équipes de Yaghi et Férey ont ainsi décrit un nombre important de nouveaux matériaux (série.des MOF et série des MIL, respectivement). De nombreuses autres équipes ont suivi cette voie et aujourd'hui le nombre de nouveaux matériaux décrits est en pleine expansion. Le plus souvent, les études visent à mettre au point des structures ordonnées, présentant des volumes poreux extrêmement importants, une bonne stabilité thermique et des fonctionnalités chimiques ajustables.

Par exemple, Yaghi *et al.* décrivent une série de structures à base de bore dans le brevet US2006/0154807 et indiquent leur intérêt dans le domaine du stockage des gaz. Le brevet US-7,202,385 de Mueller et al. propose un récapitulatif particulièrement complet des structures décrites dans la littérature et illustre parfaitement la multitude de matériaux existant déjà à ce jour.

T. Loiseau et al. (Chem. Eur. J. 2004, 10, 1373-1382) décrit une phase MIL-53 à base d'atomes d'aluminium et du ligand bdc (benzène-1,4-dicarboxylate). Ce composé présente une structure tridimensionnelle dans laquelle les chaînes inorganiques unidimensionnelles à motif -Al-O(H)- sont liées entre elles par les connecteurs téréphtaliques déprotonnés (bdc = O₂C-C₆H₄-CO₂). Chaque atome d'aluminium est hexacoordiné, deux atomes d'oxygène des groupements hydroxyles se situant en position apicale et quatre atomes d'oxygène issus de quatre connecteurs téréphtaliques se localisant en position équatoriale. De plus, un ligand organique est relié à quatre atomes d'aluminium (deux couples d'atomes d'aluminium voisins). Des molécules d'acide téréphtalique libres (H₂bdc = HO₂C-C₆H₄-CO₂H) occupent « l'espace laissé vacant par la charpente » avec un ratio H₂bdc/Al de 0,7.

En mettant au point un mode de synthèse utilisant un autre type de précurseur métallique, à base de l'élément gallium, nous avons obtenu un nouveau matériau hybride à matrice mixte organique-inorganique.

### Description de l'invention

La présente invention a pour objet un nouveau matériau cristallisé hybride, appelé IM-19 à matrice mixte organique-inorganique, contenant un réseau inorganique de centres métalliques à base de l'élément gallium connectés entre eux par des ligands organiques de type téréphtalate (ou bdc) et isostructural des matériaux MIL-53.

Le matériau hybride IM-19 selon la présente invention présente un diagramme de diffraction de rayons X incluant au moins les raies inscrites dans le tableau 1. Ce diagramme de diffraction est obtenu par analyse radiocristallographique en utilisant la méthode classique des poudres au moyen d'un diffractomètre STOE STADI-P équipé d'un monochromateur avant Ge (111) et d'un détecteur PSD. Les analyses du matériau ont été enregistrées en mode Debye-Scherrer de 5 à 50° (2θ) avec une résolution de 0.01° (2θ) et un pas de 0,1° pendant 85 secondes.

A partir de la position des pics de diffraction représentée par l'angle 2θ, on calcule, en appliquant la relation de Bragg, les distances réticulaires *dₕₖₗ* caractéristiques de l'échantillon. L'erreur de mesure Δ(*dₕₖₗ*) sur *dₕₖₗ* est calculée en fonction de l'erreur absolue Δ(2θ) affectée à la mesure de 2θ. Une erreur absolue de Δ(2θ) égale à ±0,02° est communément admise. L'intensité relative I/I₀ affectée à chaque valeur de *dₕₖₗ* est mesurée d'après la hauteur du pic de diffraction correspondant. Le diagramme de diffraction de rayons X du matériau hybride IM-19 selon l'invention comporte au moins les raies aux valeurs de *dₕₖₗ* données dans le tableau 1. Dans la colonne des *dₕₖₗ*, on a indiqué les valeurs moyennes des distances inter-réticulaires en Angströms (Å). Chacune de ces valeurs doit être affectée de l'erreur de mesure Δ(*dₕₖₗ*) comprise entre ±0.3 Å et ±0,01 Å.

**Tableau 1 : Valeurs moyennes des dₕₖₗ et intensités relatives mesurées sur un diagramme de diffraction de rayons X du matériau hybride IM-19**

| 2 Thêta (°) | *dₕₖₗ* (Å) | I/I₀ | 2 Thêta (°) | *dₕₖₗ* (Å) | I/I₀ |
|---|---|---|---|---|---|
| 9,24 | 9,56 | F | 31,33 | 2,85 | ff |
| 12,47 | 7,10 | FF | 32,11 | 2,79 | ff |
| 17,68 | 5,01 | f | 33,78 | 2,65 | ff |
| 18,12 | 4,89 | ff | 34,42 | 2,60 | ff |
| 18,56 | 4,78 | f | 34,91 | 2,57 | ff |
| 19,34 | 4,59 | ff | 35,92 | 2,50 | ff |
| 20,62 | 4,30 | ff | 36,36 | 2,47 | ff |
| 23,29 | 3,82 | ff | 36,75 | 2,44 | ff |
| 24,73 | 3,60 | ff | 37,83 | 2,38 | ff |
| 25,10 | 3,54 | f | 40,56 | 2,22 | ff |
| 26,06 | 3,42 | ff | 41,82 | 2,16 | ff |
| 26,83 | 3,32 | ff | 42,34 | 2,13 | ff |
| 27,09 | 3,29 | ff | 42,65 | 2,12 | ff |
| 27,50 | 3,24 | ff | 44,27 | 2,04 | ff |
| 28,00 | 3,18 | ff | 44,78 | 2,02 | ff |
| 29,25 | 3,05 | ff | 47,59 | 1,91 | ff |
| 29,97 | 2,98 | ff | 47,90 | 1,90 | ff |
| 30,11 | 2,97 | ff | 48,92 | 1,86 | ff |
| 31,19 | 2,87 | ff | | | |

où FF=très fort ; F=fort ; m=moyen ; mf=moyen faible ; f=faible ; ff=très faible. L'intensité I/I₀ est donnée en rapport à une échelle d'intensité relative où il est attribué une valeur de 100 à la raie la plus intense du diagramme de diffraction de rayons X : ff<15 ; 15≤ f <30 ; 30≤ mf< 50 ; 50≤ m<65 ; 65≤ F<85 ; FF≥ 85.

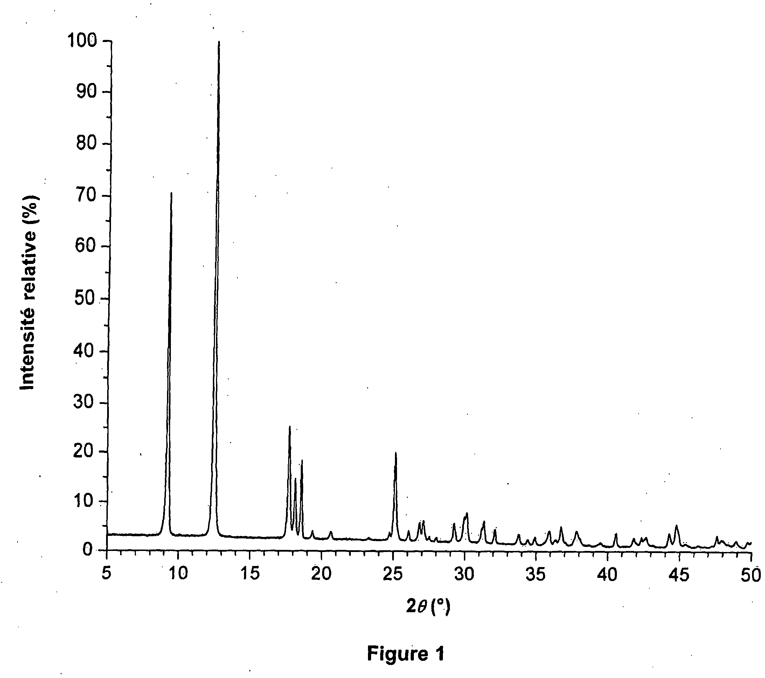

La Figure 1 correspond au diffractogramme de rayons X du solide hybride IM-19.

Le matériau hybride IM-19 s'indexe en système monoclinique, avec comme paramètres de maille *a*=19,187(3) Å; b=7,628(2) Å, *c*=6,669(1) Å et angles : α=γ=90°, β=95,86(1)°.

La présente invention porte également sur un matériau hybride cristallisé sous sa forme brute de synthèse obtenu comme intermédiaire lors de la préparation du matériau hybride IM-19. Ce matériau hybride cristallisé se présentant sous sa forme brute de synthèse est un matériau hybride à matrice mixte organique-inorganique contenant un réseau de centres métalliques à base de gallium, connectés entre eux par des ligands organiques de type téréphtalate. Il présente un diagramme de diffraction de rayons X incluant au moins les raies inscrites dans le tableau 2.

Ce diagramme a été obtenu dans les mêmes conditions que celles décrites précédemment pour le Tableau 1.

**Tableau 2 : Valeurs moyennes des dₕₖₗ et intensités relatives mesurées sur un diagramme de diffraction de rayons X du matériau hybride intermédiaire sous sa forme brute de synthèse**

| 2 Thêta (°) | *dₕₖₗ* (Å) | I/I₀ | 2 Thêta (°) | *dₕₖₗ* (Å) | I/I₀ |
|---|---|---|---|---|---|
| 8.88 | 9,95 | FF | 32,45 | 2,76 | ff |
| 10,15 | 8,71 | FF | 32,99 | 2,71 | ff |
| 12,50 | 7,08 | ff | 33,61 | 2,66 | ff |
| 14,58 | 6,07 | f | 33,93 | 2,64 | ff |
| 15,03 | 5,89 | mf | 34,21 | 2,62 | ff |
| 16,92 | 5,24 | mf | 35,02 | 2,56 | ff |
| 17,80 | 4,98 | FF | 36,04 | 2,49 | ff |
| 18,17 | 4,88 | ff | 39,95 | 2,25 | ff |
| 20,32 | 4,37 | ff | 40,48 | 2,23 | ff |
| 21,16 | 4,20 | f | 41,34 | 2,18 | ff |
| 21,66 | 4,10 | ff | 41,43 | 2,18 | ff |
| 22,54 | 3,94 | ff | 42,60 | 2,12 | ff |
| 24,23 | 3,67 | f | 43,08 | 2,10 | ff |
| 24,99 | 3,56 | ff | 43,52 | 2,08 | ff |
| 26,45 | 3,37 | ff | 43,74 | 2,07 | ff |
| 26,60 | 3,35 | ff | 44,16 | 2,05 | ff |
| 26,83 | 3,32 | m | 45,24 | 2,00 | ff |
| 27,95 | 3,19 | ff | 45,49 | 1,99 | ff |
| 28,39 | 3,14 | ff | 47,43 | 1,92 | ff |
| 30,32 | 2,95 | ff | 47,55 | 1,91 | ff |
| 31,56 | 2,83 | ff | 48,76 | 1,87 | ff |
| 32,07 | 2,79 | f | | | |

où FF=très fort ; F=fort ; m=moyen ; mf=moyen faible ; f=faible ; ff=très faible. L'intensité I/I₀ est donnée en rapport à une échelle d'intensité relative où il est attribué une valeur de 100 à la raie la plus intense du diagramme de diffraction de rayons X : ff<15 ; 15≤ f <30 ; 30≤ mf< 50 ; 50≤ m<65 ; 65≤ F<85 ; FF≥ 85.

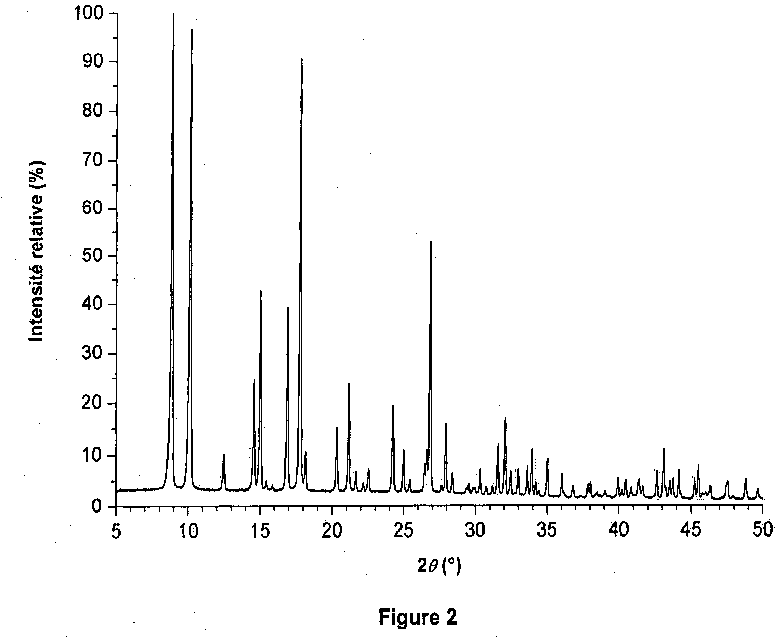

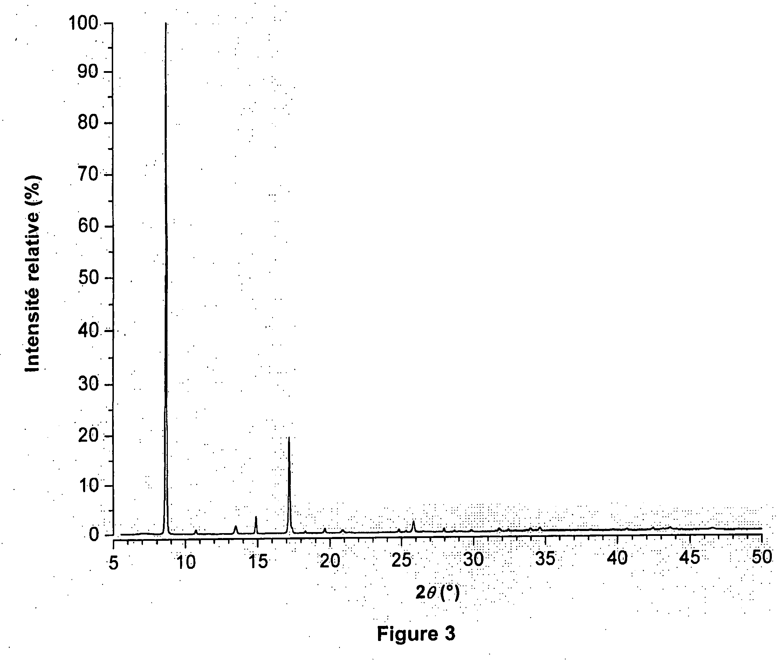

La Figure 2 correspond au diffractogramme de rayons X du solide intermédiaire cristallisé sous sa forme brute de synthèse obtenu lors de la préparation du matériau hybride IM-19.

Le matériau intermédiaire cristallisé sous sa forme brute de synthèse s'indexe en système orthorhombique, avec comme paramètres de maille *a*=17,422(2) Å; *b*=12,146(2) Å, *c*=6,737(1) Å et angles : α=β=γ=90°.

La présente invention décrit également le procédé de préparation du matériau hybride cristallisé IM-19 à matrice mixte organique-inorganique. Ce procédé comprend au moins les étapes suivantes :
i) la dissolution d'au moins un précurseur de gallium dans l'eau,
ii) l'ajout de l'acide téréphtalique (H₂bdc),
iii) éventuellement, l'ajout d'acide fluorhydrique,
iv) la cristallisation,
v) la filtration, le lavage, le séchage pour obtenir un solide intermédiaire cristallisé sous sa forme brute de synthèse,
vi) l'activation dudit solide intermédiaire cristallisé sous sa forme brute de synthèse comprenant successivement une première étape a) réalisée par voie solvothermale, à une température comprise entre 120 et 220°C, en présence d'un solvant polaire choisi parmi le diméthylsulfoxyde (DMSO) et le diméthylformamide (DMF), une deuxième étape b) d'échange en présence d'un solvant alcoolique et une troisième étape c) consistant à chauffer à une température comprise entre 150 et 280°C le solide issu de ladite étape b) et
vii) le refroidissement du solide activé pour obtenir ledit matériau IM-19 et,
viii) éventuellement, le chauffage du matériau IM-19 obtenu à une température comprise entre 300 et 400°C pour obtenir un matériau déshydraté, poreux et dépourvu de tout solvant.

Le précurseur de gallium est choisi parmi les sels de gallium (III) tels que les chlorures, sulfates, acétates ou nitrates de gallium. Très préférentiellement, le précurseur utilisé est un nitrate de gallium.

La composition molaire du mélange obtenu lors de la préparation du matériau hybride IM-19 (étapes i) à iii)) peut varier de la façon suivante : 1 mole de précurseur de gallium : 0,5 à 3 moles d'acide téréphtalique : 0 à 1 mole d'acide fluorhydrique : 100 moles d'eau.

Le mélange obtenu à l'issue de l'étape iii) est soumis à un traitement hydrothermal jusqu'à ce que l'on obtienne la cristallisation du solide intermédiaire.

L'étape de cristallisation iv) se fait à une température comprise entre la température ambiante et 260°C, préférentiellement entre 150 et 230°C pendant 12 à 72 heures, dans des conditions de pression de réaction autogène.

Le séchage selon l'étape v) du procédé de préparation du matériau IM-19 est réalisé entre 20°C et jusqu'à une température de 200°C. Le plus souvent, le séchage est réalisé entre 20 et 100°C, de préférence entre 20 et 80°C, pendant une durée variant entre 1 et 24 heures, le plus souvent entre 4 et 10 heures.

De manière avantageuse, le solide obtenu à l'issue de l'étape du séchage selon l'étape v) est lavé, avantageusement à l'eau, avec une solution à chaud de diméthylformamide (DMF), puis avec de l'éthanol.

À l'issue de ladite étape v) du procédé de préparation du matériau IM-19, on obtient le solide intermédiaire cristallisé sous sa forme brute de synthèse dans lequel l'acide téréphtalique est présent. Le diagramme de diffraction de rayons X de ce solide est celui représenté sur la figure 2 et correspondant aux valeurs moyennes des dₕₖₗ et intensités relatives mesurées données dans le tableau 2.

Ledit solide intermédiaire cristallisé est ensuite activé conformément à l'étape vi) de manière à libérer sa porosité de l'acide téréphtalique et obtenir le matériau IM-19 d'abord sous une forme déshydratée à l'issue de l'étape c) d'activation puis sous une forme hydratée à l'issue de l'étape vii).

La première étape a) du traitement d'activation est mise en oeuvre en utilisant le solide cristallisé sous sa forme brute de synthèse lequel est introduit dans un autoclave et est mis en présence d'un solvant polaire choisi parmi le diméthylsulfoxide (DMSO) et le diméthylformamide (DMF), préférentiellement le DMF, le rapport massique solvant polaire/solide cristallisé brut de synthèse, préférentiellement le rapport massique DMF/solide brut de synthèse est compris entre 20 et 200, préférentiellement entre 50 et 150. Ladite étape a) est avantageusement réalisée à une température comprise entre 150 et 180°C. Elle est avantageusement conduite pendant une durée comprise entre 1 et 10 jours, très avantageusement comprise entre 2 et 10 jours et de manière encore plus préférée entre 4 et 10 jours.

Ladite étape a) est préférentiellement suivie d'un refroidissement à une température comprise entre la température ambiante et 50°C, puis d'une filtration et d'un séchage de la suspension issue de ladite étape a). Le séchage est réalisé préférentiellement à une température comprise entre 20 et 50°C.

Il est avantageusement mené pendant une durée comprise entre 8 et 24 heures. On obtient un solide cristallisé comprenant des molécules de solvant polaire occluses.

La deuxième étape b) du traitement d'activation consiste à échanger le solvant polaire, préférentiellement le DMF, présent dans la porosité du solide issu de ladite première étape a) du traitement d'activation, par un solvant alcoolique préférentiellement choisi parmi le méthanol, l'éthanol et l'isopropanol. De manière très préférée, ledit solvant alcoolique est l'éthanol. Ladite deuxième étape consiste généralement à plonger le solide issu de ladite étape a) dans ledit solvant alcoolique, préférentiellement dans l'éthanol, selon un rapport massique solvant alcoolique/solide, préférentiellement éthanol/solide, compris entre 200 et 1000, de préférence entre 350 et 800. De manière très préférée, ladite deuxième étape est réalisée sans agitation. Elle est effectuée à une température comprise entre la température ambiante et 75°C, de préférence à température ambiante.

Il est obtenu une suspension à l'issue de ladite étape b) du traitement d'activation, ladite suspension étant préférentiellement filtrée puis séchée de manière à obtenir une poudre. Le séchage est opéré à une température comprise entre la température ambiante et 70°C, de préférence à température ambiante, pendant une durée comprise entre 2 et 12 heures.

La troisième étape c) du traitement d'activation consiste à chauffer le solide issu de ladite étape b) à une température comprise entre 150 et 280°C, préférentiellement pendant une durée comprise entre 8 heures et 3 jours: Le matériau issu de ladite troisième étape c) est déshydraté et est dépourvu de tout solvant.

Le matériau IM-19 est finalement obtenu par refroidissement du solide activé conformément à ladite étape vi), préférentiellement sous air. Il se présente sous une forme hydratée.

Cette étape de refroidissement peut éventuellement être suivie par une étape de chauffage sous air à une température comprise entre au moins 300 et 400°C, préférentiellement pendant une durée de 1 jour. Le matériau obtenu à l'issue de cette étape est déshydraté, dépourvu de tout solvant et poreux. Il s'agit d'un matériau hybride cristallisé présentant un diagramme de diffraction de rayons X incluant au moins les raies inscrites dans le tableau 3.

Ce diagramme de diffraction des rayons X est obtenu par radiocristallographie en utilisant la méthode classique des poudres au moyen d'un diffractomètre PANALYTICAL X'PERT PRO MPD équipé d'un monochromateur avant, symétrique et courbe Ge (111) pour cuivre et d'un détecteur PSD X'Celerator avec une longueur active de 2,122 mm. L'enregistrement a été réalisé en géométrie Bragg-Brentano pour un domaine angulaire de 5,5000 à 50,0021° en 2θ pendant une durée totale de 36 minutes et 39 secondes.

**Tableau 3 : Valeurs moyennes des dₕₖₗ et intensités relatives mesurées sur un diagramme de diffraction de rayons X du matériau obtenu à l'issue de la troisième étape du traitement d'activation**

| 2 Thêta (°) | *dₕₖₗ*(Å) | I/I₀ |
|---|---|---|
| 8,67 | 10,19 | FF |
| 10,78 | 8,20 | ff |
| 13,47 | 6,57 | ff |
| 14,89 | 5,94 | ff |
| 17,21 | 5,15 | f |
| 17,44 | 5,08 | ff |
| 18,35 | 4,83 | ff |
| 19,64 | 4,52 | ff |
| 20,87 | 4,25 | ff |
| 24,85 | 3,58 | ff |
| 25,84 | 3,44 | ff |
| 27,99 | 3,19 | ff |
| 31,79 | 2,81 | ff |
| 32,47 | 2,76 | ff |
| 33,78 | 2,65 | ff |
| 33,98 | 2,64 | ff |
| 34,63 | 2,59 | ff |
| 40,71 | 2,21 | ff |
| 42,53 | 2,12 | ff |
| 43,62 | 2,07 | ff |
| 46,53 | 1,95 | ff |

où FF=très fort ; F=fort ; m=moyen ; mf=moyen faible ; f=faible ; ff=très faible. L'intensité I/I₀ est donnée en rapport à une échelle d'intensité relative où il est attribué une valeur de 100 à la raie la plus intense du diagramme de diffraction de rayons X : ff<15 ; 15≤ f <30 ; 30≤ mf< 50 ; 50≤ m<65 ; 65≤ F<85 ; FF≥ 85.

Ce matériau poreux s'indexe en système orthorhombique, avec comme paramètres de maille *a*=16,734(3) Å; *b*=13,282(3) Å, *c*=6,741(2) Å et angles : α=β=γ=90°.

Ce matériau poreux dont le diagramme de diffraction de rayons X comprend au moins les raies inscrites dans le tableau 3 peut éventuellement être obtenu en chauffant entre 150 et 350°C le solide obtenu à l'issue de l'étape a) du traitement d'activation.

La présente invention concerne également l'utilisation du matériau hybride IM-19 comme adsorbant ou comme catalyseur.

L'invention est illustrée par les exemples suivants qui ne présentent, en aucun cas, un caractère limitatif.

### Exemples

### Exemple 1 : Préparation et caractérisation du matériau hybride IM-19 à matrice mixte organique-inorganique selon l'invention (voie fluorée)

18,33 g d'eau distillée sont placés dans un récipient en PTFE de 40 mL de volume intérieur. 2,66 g de nitrate de gallium hydraté (Alfa Aesar) sont ajoutés. Le mélange est agité pendant 5 minutes à l'aide d'un agitateur magnétique. Après homogénéisation, 0,52 g d'une solution aqueuse d'acide fluorhydrique (40% massique, Riedel de Haën) est ajouté. La solution est agitée pendant 5 minutes. 1,74 g d'acide téréphtalique (Fluka) est alors ajouté. Le mélange est agité pendant 5 minutes. La composition molaire du mélange obtenu est : 1 nitrate de gallium : 1 acide téréphtalique : 1 HF : 100 H₂O. Le récipient en PTFE est alors transvasé dans un autoclave puis chauffé sans agitation à 220°C pendant 3 jours. Après refroidissement, le solide cristallisé obtenu est lavé à l'eau, avec une solution à chaud de DMF et ensuite à l'éthanol. Après séchage sous l'air à 25°C pendant environ 6 heures, on obtient un solide intermédiaire cristallisé sous forme de poudre cristalline correspondant au solide sous sa forme brute de synthèse présentant un diagramme de diffraction de rayons X incluant au moins les raies inscrites dans le tableau 2.

L'activation du solide cristallisé est réalisée tout d'abord en chauffant par voie solvothermale le solide cristallisé sous sa forme brute de synthèse dans une solution de DMF (taux de remplissage de l'autoclave : 50% ; rapport massique DMF/solide cristallisé = 75) à 160°C pendant 7 jours (agitation manuelle de l'autoclave 1 fois par jour). Après refroidissement, la suspension obtenue est filtrée et séchée à 25°C pendant 12 heures. On obtient un solide contenant le DMF au sein de sa porosité. Il est plongé dans une solution d'éthanol absolu pendant 24 heures sans agitation pour la mise en oeuvre de la seconde phase d'activation (rapport massique EtOH/solide= 500). Après filtration et séchage à 25°C pendant 6 heures, la poudre obtenue est, dans une troisième étape, chauffée sous air à 220°C pendant 24 heures. Après refroidissement à l'air, on obtient un produit solide sous forme de poudre lequel est analysé par diffraction de rayons X et identifié comme étant constitué de cristaux de solide IM-19 présentant un diagramme de diffraction de rayons X incluant au moins les raies inscrites dans le tableau 1.

### Exemple 2 : Préparation et caractérisation du matériau hybride IM-19 à matrice mixte organique-inorganique selon l'invention (voie sans acide fluorhydrique):

6,61 g d'eau distillée sont placés dans un récipient en PTFE de 20 mL de volume intérieur. 0,96 g de nitrate de gallium hydraté (Alfa Aesar) est ajouté. Le mélange est agité pendant 5 minutes à l'aide d'un agitateur magnétique. 0,61 g d'acide téréphtalique (Fluka) est alors ajouté. Le mélange est agité pendant 5 minutes. La composition molaire du mélange obtenu est : 1 nitrate de gallium : 1 acide téréphtalique : 100 H₂O. Le récipient en PTFE est alors transvasé dans un autoclave puis chauffé sans agitation à 160°C pendant 1 jour. Après refroidissement, le solide cristallisé obtenu est filtré, lavé à l'eau, puis avec une solution à chaud de DMF et ensuite à l'éthanol. Après séchage sous air à 25°C pendant environ 6 heures, on obtient un solide intermédiaire cristallisé sous forme de poudre cristalline correspondant au solide sous sa forme brute de synthèse présentant un diagramme de diffraction de rayons X incluant au moins les raies inscrites dans le tableau 2.

L'activation du solide cristallisé est réalisée tout d'abord en chauffant par voie solvothermale le solide cristallisé sous sa forme brute de synthèse dans une solution de DMF (taux de remplissage de l'autoclave : 50% ; rapport massique DMF/solide cristallisé = 75) à 160°C pendant 7 jours (agitation manuelle de l'autoclave 1 fois par jour). Après refroidissement, la suspension obtenue est filtrée et séchée à 25°C pendant 12 heures. On obtient un solide contenant le DMF au sein de sa porosité. Il est plongé dans une solution d'éthanol absolu pendant 24 heures sans agitation pour la mise en oeuvre de la seconde phase d'activation (rapport massique EtOH/solide= 500). Après filtration et séchage à 25°C pendant 6 heures, la poudre obtenue est, dans une troisième étape, chauffée sous air à 220°C pendant 24 heures. Après refroidissement à l'air, on obtient un produit solide sous forme de poudre lequel est analysé par diffraction de rayons X et identifié comme étant constitué de cristaux de solide IM-19 présentant un diagramme de diffraction de rayons X incluant au moins les raies inscrites dans le tableau 1.

### Exemple 3 : Préparation et caractérisation du matériau hybride IM-19, pour différentes compositions molaires du mélange réactionnel et températures de réaction.

Les exemples 1 (synthèses a-e) et 2 (synthèses f-h) sont reproduits, en faisant varier la composition molaire du mélange et/ou les températures de réaction, les autres conditions opératoires restant identiques. Ces différents paramètres sont décrits dans le tableau suivant :

| N° de synthèse | Nitrate de gallium hydraté (mole) | Acide téréphtalique (mole) | Acide fluorhydrique (mole) | Eau (mole) | Température (°C) |
|---|---|---|---|---|---|
| a | 1 | 0,5 | 0,5 | 100 | 180 |
| b | 1 | 0,5 | 1,0 | 100 | 180 |
| c | 1 | 1,0 | 1,0 | 100 | 180 |
| d | 1 | 1,0 | 1,0 | 100 | 200 |
| e | 1 | 2,0 | 1,0 | 100 | 220 |
| f | 1 | 1 | - | 100 | 160 |
| g | 1 | 2 | - | 100 | 160 |
| h | 1 | 3 | - | 100 | 160 |

Ces solides sont synthétisés en reproduisant les protocoles expérimentaux décrits dans les exemples 1 et 2 respectivement

A l'issue de l'étape d'activation et de refroidissement du solide activé, on obtient une poudre cristallisée constituée de cristaux de IM-19.

## Revendications

1. Matériau hybride cristallisé IM-19 à matrice mixte organique-inorganique contenant un réseau inorganique de centres métalliques à base de l'élément gallium, connectés entre eux par des ligands organiques de type téréphtalate, présentant un diagramme de diffraction de rayons X incluant au moins les raies inscrites dans le tableau ci-dessous :
| 2 Thêta (°) | *dₕₖₗ* (Å) | I/I₀ | 2 Thêta (°) | *d*_{*hk*/} (Å) | I/I₀ |
|---|---|---|---|---|---|
| 9,24 | 9,56 | F | 31,33 | 2,85 | ff |
| 12,47 | 7,10 | FF | 32,11 | 2,79 | ff |
| 17,68 | 5,01 | f | 33,78 | 2,65 | ff |
| 18,12 | 4,89 | ff | 34,42 | 2,60 | ff |
| 18,56 | 4,78 | f | 34,91 | 2,57 | ff |
| 19,34 | 4,59 | ff | 35,92 | 2,50 | ff |
| 20,62 | 4,30 | ff | 36,36 | 2,47 | ff |
| 23,29 | 3,82 | ff | 36,75 | 2,44 | ff |
| 24,73 | 3,60 | ff | 37,83 | 2,38 | ff |
| 25,10 | 3,54 | f | 40,56 | 2,22 | ff |
| 26,06 | 3,42 | ff | 41,82 | 2,16 | ff |
| 26,83 | 3,32 | ff | 42,34 | 2,13 | ff |
| 27,09 | 3,29 | ff | 42,65 | 2,12 | ff |
| 27,50 | 3,24 | ff | 44,27 | 2,04 | ff |
| 28,00 | 3,18 | ff | 44,78 | 2,02 | ff |
| 29,25 | 3,05 | ff | 47,59 | 1,91 | ff |
| 29,97 | 2,98 | ff | 47,90 | 1,90 | ff |
| 30,11 | 2,97 | ff | 48,92 | 1,86 | ff |
| 31.19 | 2.87 | ff | | | |
où FF=très fort ; F=fort ; m=moyen ; mf=moyen faible ; f=faible ; ff=très faible. l'intensité I/I₀ étant donnée en rapport à une échelle d'intensité relative où il est attribué une valeur de 100 à la raie la plus intense du diagramme de diffraction de rayons X : ff<15 ; 15≤ f <30 ; 30≤ mf< 50 ; 50≤ m<65 ; 65≤ F<85 ; FF≥ 85.

2. Matériau selon la revendication 1 **caractérisé en ce qu'**il s'indexe en système en système monoclinique, avec comme paramètres de maille *a*=19,187(3) Å; *b*=7,628(2) Å, *c*=6,669(1) Å et angles : α=γ=90°, β=95,86(1)°.

3. Matériau hybride cristallisé, se présentant sous sa forme brute de synthèse, à matrice mixte organique-inorganique contenant un réseau de centres métalliques à base de gallium, connectés entre eux par des ligands organiques de type téréphtalate, présentant un diagramme de diffraction de rayons X incluant au moins les raies inscrites dans le tableau ci-dessous :
| 2 Thêta (°) | *dₕₖₗ* (Å) | I/I₀ | 2 Thêta (°) | *dₕₖₗ* (Å) | I/I₀ |
|---|---|---|---|---|---|
| 8,88 | 9,95 | FF | 32,45 | 2,76 | ff |
| 10,15 | 8,71 | FF | 32,99 | 2,71 | ff |
| 12,50 | 7,08 | ff | 33,61 | 2,66 | ff |
| 14,58 | 6,07 | f | 33,93 | 2,64 | ff |
| 15,03 | 5,89 | mf | 34,21 | 2,62 | ff |
| 16,92 | 5,24 | mf | 35,02 | 2,56 | ff |
| 17,80 | 4,98 | FF | 36,04 | 2,49 | ff |
| 18,17 | 4,88 | ff | 39,95 | 2,25 | ff |
| 20,32 | 4,37 | ff | 40,48 | 2,23 | ff |
| 21,16 | 4,20 | f | 41,34 | 2,18 | ff |
| 21,66 | 4,10 | ff | 41,43 | 2,18 | ff |
| 22,54 | 3,94 | ff | 42,60 | 2,12 | ff |
| 24,23 | 3,67 | f | 43,08 | 2,10 | ff |
| 24,99 | 3,56 | ff | 43,52 | 2,08 | ff |
| 26,45 | 3,37 | ff | 43,74 | 2,07 | ff |
| 26,60 | 3,35 | ff | 44,16 | 2,05 | ff |
| 26,83 | 3,32 | m | 45,24 | 2,00 | ff |
| 27,95 | 3,19 | ff | 45,49 | 1,99 | ff |
| 28,39 | 3,14 | ff | 47,43 | 1,92 | ff |
| 30,32 | 2,95 | ff | 47,55 | 1,91 | ff |
| 31,56 | 2,83 | ff | 48,76 | 1,87 | ff |
| 32,07 | 2,79 | f | | | |
| 48,76 | 1,87 | ff | | | |
où FF=très fort ; F=fort ; m=moyen ; mf=moyen faible ; f=faible ; ff=très faible, l'intensité I/I₀ étant donnée en rapport à une échelle d'intensité relative où il est attribué une valeur de 100 à la raie la plus intense du diagramme de diffraction de rayons X : ff<15 ; 15≤ f <30 ; 30≤ mf< 50 ; 50≤ m<65 ; 65≤ F<85 ; FF≥ 85.

4. Matériau hybride cristallisé se présentant sous sa forme brute de synthèse selon la revendication 3 **caractérisé en ce qu'**il s'indexe en système orthorhombique, avec comme paramètres de maille *a*=17,422(2) Å; *b*=12,146(2) Å, *c*=6,737(1) Å et angles : α=β=γ=90°

5. Procédé de préparation d'un matériau hybride cristallisé à matrice mixte organique-inorganique selon l'une des revendications 1 ou 2 comprenant au moins les étapes suivantes :
i) la dissolution d'au moins un précurseur de gallium dans l'eau,
ii) l'ajout de l'acide téréphtalique (H₂bdc),
iii) éventuellement, l'ajout d'acide fluorhydrique,
iv) la cristallisation,
v) la filtration, le lavage, le séchage pour obtenir un solide intermédiaire cristallisé sous sa forme brute de synthèse défini dans la revendication 3,
vi) l'activation dudit solide sous sa forme brute de synthèse comprenant successivement une première étape a) réalisée par voie solvothermale, à une température comprise entre 120 et 220°C, en présence d'un solvant polaire choisi parmi le diméthylsulfoxyde (DMSO) et le diméthylformamide (DMF), une deuxième étape b) d'échange en présence d'un solvant alcoolique et une troisième étape c) consistant à chauffer à une température comprise entre 150 et 280°C le solide issu de ladite étape b) et
vii) le refroidissement du solide activé pour obtenir ledit matériau IM-19 et,
viii) éventuellement, le chauffage du matériau obtenu IM-19 à une température comprise entre 300 et 400°C pour obtenir un matériau déshydraté, poreux et dépourvu de tout solvant.

6. Procédé selon la revendication 5 dans lequel le précurseur de gallium est choisi parmi les sels de gallium (III).

7. Procédé selon la revendication 6 dans lequel le précurseur de gallium est le nitrate de gallium.

8. Procédé selon l'une des revendications 5 à 7 dans lequel la composition molaire du mélange obtenu lors des étapes i) à iii) varie de la façon suivante : 1 mole de précurseur de gallium : 0,5 à 3 moles d'acide téréphtalique : 0 à 1 moles d'acide fluorhydrique : 100 moles d'eau.

9. Procédé selon l'une des revendications 5 à 8 dans lequel le mélange obtenu à l'issue de l'étape iii) est soumis un traitement hydrothermal jusqu'à ce qu'on obtienne la cristallisation du solide intermédiaire l'étape de cristallisation se faisant entre température ambiante et 260°C pendant 12 à 72 heures, dans des conditions de pression de réaction autogène.

10. Procédé selon l'une des revendications 5 à 9 dans lequel le séchage selon l'étape v) est réalisé entre 20 et 200°C, pendant une durée variant de 1 à 24 heures.

11. Procédé selon l'une des revendications 5 à 10 dans lequel le rapport massique solvant polaire et le solide cristallisé brut de synthèse mis en jeu lors de la première étape a) du traitement d'activation est compris entre 20 et 200.

12. Procédé selon l'une des revendications 5 à 11 dans lequel l'étape a) est suivie d'un refroidissement à une température comprise entre la température ambiante et 50°C, puis d'une filtration et d'un séchage de la suspension issue de ladite étape a), le séchage étant réalisé préférentiellement à une température comprise entre 20 et 50°C.

13. Procédé selon l'une des revendications 5 à 12 dans lequel le rapport massique entre solvant alcoolique et le solide mis en jeu lors de l'étape b) du traitement d'activation est compris entre 200 et 1000.

14. Procédé selon l'une des revendications 5 à 13 dans lequel à l'issue de l'étape b) du traitement d'activation on obtient une suspension, qui est ensuite filtrée et séchée à une température comprise entre la température ambiante et 70°C.

15. Utilisation du matériau hybride selon l'une des revendications 1 ou 2 obtenu par le procédé selon l'une des revendications 5 à 14 comme adsorbant ou comme catalyseur.

## Claims

1. A crystallized hybrid material IM-19 with a mixed organic-inorganic matrix containing an inorganic network of metal centres based on the element gallium, connected to each other by organic ligands of terephthalate type, having an X-ray diffraction diagram including at least the lines inscribed in the table below:
| 2 Theta (°) | *dₕₖₗ* (Å) | I/I₀ | 2 Theta (°) | *dₕₖₗ* (Å) | I/I₀ |
|---|---|---|---|---|---|
| 9.24 | 9.56 | F | 31.33 | 2.85 | ff |
| 12.47 | 7.10 | FF | 32.11 | 2.79 | ff |
| 17.68 | 5.01 | ff | 33.78 | 2.65 | ff |
| 18.12 | 4.89 | ff | 34.42 | 2.60 | ff |
| 18.56 | 4.78 | ff | 34.91 | 2.57 | ff |
| 19.34 | 4.59 | ff | 35.92 | 2.50 | ff |
| 20.62 | 4.30 | ff | 36.36 | 2.47 | ff |
| 23.29 | 3.82 | ff | 36.75 | 2.44 | ff |
| 24.73 | 3.60 | ff | 37.83 | 2.38 | ff |
| 25.10 | 3.54 | ff | 40.56 | 2.22 | ff |
| 26.06 | 3.42 | ff | 41.82 | 2.16 | ff |
| 26.83 | 3.32 | ff | 42.34 | 2.13 | ff |
| 27.09 | 3.29 | ff | 42.65 | 2.12 | ff |
| 27.50 | 3.24 | ff | 44.27 | 2.04 | ff |
| 28.00 | 3.18 | ff | 44.78 | 2.02 | ff |
| 29.25 | 3.05 | ff | 47.59 | 1.91 | ff |
| 29.97 | 2.98 | ff | 47.90 | 1.90 | ff |
| 30.11 | 2.97 | ff | 48.92 | 1.86 | ff |
| 31.19 | 2.87 | ff | | | |
where FF=very high ; F=high ; m=medium ; mf=medium low ; f=low ; ff=very low. Intensity I/I₀ is given with respect to a relative intensity scale where a value of 100 is assigned to the most intense line of the X-ray diffraction diagram: ff<15 ; 15≤ f <30 ; 30≤ mf< 50 ; 50≤ m<65 ; 65≤ F<85 ; FF≥ 85.

2. A material as claimed in claim 1, **characterized in that** it is indexed in a monoclinic system with, as the cell parameters: *a*=19.187(3) Å; *b*=7.628(2) Å, *c*=6.669(1) Å and angles : α=γ=90°, β=95.86(1)°.

3. A crystallized hybrid material in as-synthesized form with a mixed organic-inorganic matrix containing a network of metal centres based on the element gallium, connected to each other by organic ligands of terephthalate type, having an X-ray diffraction diagram including at least the lines inscribed in the table below:
| 2 Theta (°) | *dₕₖₗ* (Å) | I/I₀ | 2 Theta (°) | *dₕₖₗ* (Å) | I/I₀ |
|---|---|---|---|---|---|
| 8.88 | 9.95 | FF | 32.45 | 2.76 | ff |
| 10.15 | 8.71 | FF | 32.99 | 2.71 | ff |
| 12.50 | 7.08 | ff | 33.61 | 2.66 | ff |
| 14.58 | 6.07 | f | 33.93 | 2.64 | ff |
| 15.03 | 5.89 | mf | 34.21 | 2.62 | ff |
| 16.92 | 5.24 | mf | 35.02 | 2.56 | ff |
| 17.80 | 4.98 | FF | 36.04 | 2.49 | ff |
| 18.17 | 4.88 | ff | 39.95 | 2.25 | ff |
| 20.32 | 4.37 | ff | 40.48 | 2.23 | ff |
| 21.16 | 4.20 | ff | 41.34 | 2.18 | ff |
| 21.66 | 4.10 | ff | 41.43 | 2.18 | ff |
| 22.54 | 3.94 | ff | 42.60 | 2.12 | ff |
| 24.23 | 3.67 | ff | 43.08 | 2.10 | ff |
| 24.99 | 3.56 | ff | 43.52 | 2.08 | ff |
| 26.45 | 3.37 | ff | 43.74 | 2.07 | ff |
| 26.60 | 3.35 | ff | 44.16 | 2.05 | ff |
| 26.83 | 3.32 | m | 45.24 | 2.00 | ff |
| 27.95 | 3.19 | ff | 45.49 | 1.99 | ff |
| 28.39 | 3.14 | ff | 47.43 | 1.92 | ff |
| 30.32 | 2.95 | ff | 47.55 | 1.91 | ff |
| 31.56 | 2.83 | ff | 48.76 | 1.87 | ff |
| 32.07 | 2.79 | f | | | |
where FF=very high ; F=high ; m=medium ; mf=medium low ; f=low ; ff=very low. Intensity I/I₀ is given with respect to a relative intensity scale where a value of 100 is assigned to the most intense line of the X-ray diffraction diagram: ff<15 ; 15≤ f <30 ; 30≤ mf< 50 ; 50≤ m<65 ; 65≤ F<85 ; FF≥ 85.

4. A crystallized hybrid material in as-synthesized form as claimed in claim 3, **characterized in that** it is indexed in an orthorhombic system with, as the cell parameters: *a*=17.422(2) Å; *b*=12.146(2) Å, *c*=6.737(1) Å and angles : α=γ=β=90°.

5. A method of preparing a crystallized hybrid material with a mixed organic-inorganic matrix as claimed in any one of claims 1 or 2, comprising at least the following stages:
i) dissolving at least one gallium precursor in water,
ii) adding terephthalic acid (H₂bdc),
iii) optionally adding hydrofluoric acid,
iv) crystallizing,
v) filtering, washing, drying so as to obtain a crystallized intermediate solid in its as-synthesized form defined in claim 3,
vi) activating said as-synthesized solid, comprising successively a first stage a) carried out through solvothermal route, at a temperature ranging between 120°C and 220°C, in the presence of a polar solvent selected from among dimethylsulfoxide (DMSO) and dimethylformamide (DMF), a second stage b) of exchange in the presence of an alcoholic solvent and a third stage c) consisting in heating to a temperature ranging between 150°C and 280°C the solid obtained at the end of stage b),
vii) cooling the activated solid so as to obtain said material IM-19, and
viii) optionally heating the material IM-19 obtained to a temperature ranging between 300°C and 400°C so as to obtain a dehydrated, porous and solvent-free material.

6. A method as claimed in claim 5, wherein the gallium precursor is selected from among gallium (III) salts.

7. A method as claimed in claim 6, wherein the gallium precursor is gallium nitrate.

8. A method as claimed in any one of claims 5 to 7, wherein the molar composition of the mixture obtained in stages i) to iii) is in the following range: 1 mole gallium precursor: 0.5 to 3 moles terephthalic acid: 0 to 1 mole hydrofluoric acid: 100 moles water.

9. A method as claimed in any one of claims 5 to 8, wherein the mixture obtained at the end of stage iii) is subjected to a hydrothermal treatment until crystallization of the intermediate solid is obtained, the crystallization stage taking place between ambient temperature and 260°C for 12 to 72 hours, under autogenous reaction pressure conditions.

10. A method as claimed in any one of claims 5 to 9, wherein drying according to stage v) is carried out between 20°C and 200°C, for a duration ranging from 1 to 24 hours.

11. A method as claimed in any one of claims 5 to 10, wherein the mass ratio of polar solvent to as-synthesized crystallized solid involved during first stage a) of the activation treatment ranges between 20 and 200.

12. A method as claimed in any one of claims 5 to 11, wherein stage a) is followed by cooling to a temperature ranging between ambient temperature and 50°C, then filtering and drying of the suspension resulting from stage a), drying being preferably carried out at a temperature ranging between 20°C and 50°C.

13. A method as claimed in any one of claims 5 to 12, wherein the mass ratio of alcoholic solvent to solid involved in stage b) of the activation treatment ranges between 200 and 1000.

14. A method as claimed in any one of claims 5 to 13 wherein, at the end of stage b) of the activation treatment, a suspension is obtained, which is then filtered and dried at a temperature ranging between ambient temperature and 70°C.

15. Use of the hybrid material as claimed in any one of claims 1 or 2 obtained with the method as claimed in any one of claims 5 to 14 as an adsorbent or a catalyst.

## Patentansprüche

1. Kristallisiertes Hybridmaterial IM-19 mit organisch-anorganischer Mischmatrix, das ein anorganisches Netzwerk aus Metallzentren auf der Basis des Elements Gallium enthält, die miteinander durch organische Liganden vom Typ Terephthalat verbunden sind, das ein Röntgendiffraktionsdiagramm aufweist, das mindestens die Peaks enthält, die in der nachfolgenden Tabelle eingetragen sind:
| 2 theta (°) | dₕₖₗ(Å) | I/I₀ | 2 theta (°) | dₕₖₗ(Å) | I/I₀ |
|---|---|---|---|---|---|
| 9,24 | 9,56 | F | 31,33 | 2,85 | ff |
| 12,47 | 7,10 | FF | 32,11 | 2,79 | ff |
| 17,68 | 5,01 | f | 33,78 | 2,65 | ff |
| 18,12 | 4,89 | ff | 34,42 | 2,60 | ff |
| 18,56 | 4,78 | f | 34,91 | 2,57 | ff |
| 19,34 | 4,59 | ff | 35,92 | 2,50 | ff |
| 20,62 | 4,30 | ff | 36,36 | 2,47 | ff |
| 23,29 | 3,82 | ff | 36,75 | 2,44 | ff |
| 24,73 | 3,60 | ff | 37,83 | 2,38 | ff |
| 25,10 | 3,54 | f | 40,56 | 2,22 | ff |
| 26,06 | 3,42 | ff | 41,82 | 2,16 | ff |
| 26,83 | 3,32 | ff | 42,34 | 2,13 | ff |
| 27,09 | 3,29 | ff | 42,65 | 2,12 | ff |
| 27,50 | 3,24 | ff | 44,27 | 2,04 | ff |
| 28,00 | 3,18 | ff | 44,78 | 2,02 | ff |
| 29,25 | 3,05 | ff | 47,59 | 1,91 | ff |
| 29,97 | 2,98 | ff | 47,90 | 1,90 | ff |
| 30,11 | 2,97 | ff | 48,92 | 1,86 | ff |
| 31,19 | 2,87 | ff | | | |
wobei FF = sehr stark; F = stark; m = mittel; mf = mittelschwach; f = schwach; ff = sehr schwach. Die Intensität I/I₀ wird bezogen auf eine relative Intensitätsskala angegeben, wobei dem intensivsten Peak des Röntgendiffraktionsdiagramms ein Wert von 100 zugeschrieben wird: ff<15; 15≤f<30; 30≤mf<50; 50≤m<65; 65≤F<85; FF≥85.

2. Material nach Anspruch 1, **dadurch gekennzeichnet, dass** es in einem monoklinen Kristallsystem indiziert ist, wobei es als Gitterparameter *a* = 19,187(3) Ǻ; *b* = 7,628(2) Ǻ, *c* = 6,669(1) Ǻ und die Winkel: α = γ= 90°, β = 95,86(1)° aufweist.

3. Kristallisiertes Hybridmaterial in seiner rohen Syntheseform, mit organisch-anorganischer Mischmatrix, das ein anorganisches Netzwerk von Metallzentren auf der Basis des Elements Gallium enthält, die miteinander durch organische Liganden vom Typ Terephthalat verbunden sind, das ein Röntgendiffraktionsdiagramm aufweist, das mindestens die Peaks enthält, die in der nachfolgenden Tabelle eingetragen sind:
| 2 theta (°) | dₕₖₗ(Å) | I/I₀ | 2 theta (°) | dₕₖₗ(Å) | I/I₀ |
|---|---|---|---|---|---|
| 8,88 | 9,95 | FF | 32,45 | 2,76 | ff |
| 10,15 | 8,71 | FF | 32,99 | 2,71 | ff |
| 12,50 | 7,08 | ff | 33,61 | 2,66 | ff |
| 14,58 | 6,07 | f | 33,93 | 2,64 | ff |
| 15,03 | 5,89 | mf | 34,21 | 2,62 | ff |
| 16,92 | 5,24 | mf | 35,02 | 2,56 | ff |
| 17,80 | 4,98 | FF | 36,04 | 2,49 | ff |
| 18,17 | 4,88 | ff | 39,95 | 2,25 | ff |
| 20,32 | 4,37 | ff | 40,48 | 2,23 | ff |
| 21,16 | 4,20 | f | 41,34 | 2,18 | ff |
| 21,66 | 4,10 | ff | 41,43 | 2,18 | ff |
| 22,54 | 3,94 | ff | 42,60 | 2,12 | ff |
| 24,23 | 3,67 | f | 43,08 | 2,10 | ff |
| 24,99 | 3,56 | ff | 43,52 | 2,08 | ff |
| 26,45 | 3,37 | ff | 43,74 | 2,07 | ff |
| 26,60 | 3,35 | ff | 44,16 | 2,05 | ff |
| 26,83 | 3,32 | m | 45,24 | 2,00 | ff |
| 27,95 | 3,19 | ff | 45,49 | 1,99 | ff |
| 28,39 | 3,14 | ff | 47,43 | 1,92 | ff |
| 30,32 | 2,95 | ff | 47,55 | 1,91 | ff |
| 31,56 | 2,83 | ff | 48,76 | 1,87 | ff |
| 32,07 | 2,79 | f | | | |
| 48,76 | 1,87 | ff | | | |
wobei FF = sehr stark; F = stark; m = mittel; mf = mittelschwach; f = schwach; ff = sehr schwach. Die Intensität I/I₀ wird bezogen auf eine relative Intensitätsskala angegeben, wobei dem stärksten Peak des Röntgendiffraktionsdiagramms ein Wert von 100 zugeschrieben wird: ff<15; 15≤f<30; 30≤mf<50; 50≤m<65; 65≤F<85; FF≥85.

4. Kristallisiertes Hybridmaterial, in seiner rohen Syntheseform gemäß Anspruch 3, **dadurch gekennzeichnet, dass** es in einem rhombischen Kristallsystem indiziert ist, wobei es als Gitterparameter *a* = 17,422(2) Ǻ; *b* = 12,146(2) Ǻ, *c* = 6,737(1) Ǻ und die Winkel: α = β = γ = 90° aufweist.

5. Verfahren zur Herstellung eines kristallisierten Hybridmaterials mit organisch-anorganischer Mischmatrix nach einem der Ansprüche 1 oder 2, das mindestens die folgenden Schritte umfasst:
i) Auflösen mindestens eines Galliumvorläufers in Wasser,
ii) Zugeben von Terephthalsäure (H₂bdc),
iii) gegebenenfalls Zugeben von Fluorwasserstoffsäure,
iv) Kristallisieren,
v) Filtrieren, Waschen, Trocknen, um einen kristallisierten Zwischenfeststoff in seiner in Anspruch 3 definierten rohen Syntheseform zu erhalten,
vi) Aktivieren des Feststoffs in seiner rohen Syntheseform, das nacheinander einen ersten Schritt a), der mittels Solvothermalsynthese bei einer Temperatur im Bereich zwischen 120 und 220 °C in Gegenwart eines polaren Lösemittels, ausgewählt aus Dimethylsulfoxid (DMSO) und Dimethylformamid (DMF), ausgeführt wird, einen zweiten Schritt b) zum Austausch in Gegenwart eines alkoholischen Lösemittels und einen dritten Schritt c) umfasst, der darin besteht, den Feststoff aus Schritt b) auf eine Temperatur im Bereich zwischen 150 und 280 °C zu erwärmen und vii) Abkühlen des aktivierten Feststoffs, um das IM-19-Material zu erhalten, und viii) gegebenenfalls Erwärmen des erhaltenen Materials IM-19 auf eine Temperatur im Bereich zwischen 300 und 400 °C, um ein dehydratisiertes, poröses und lösemittelfreies Material zu erhalten.

6. Verfahren nach Anspruch 5, wobei der Galliumvorläufer aus den Gallium(III)-salzen ausgewählt ist.

7. Verfahren nach Anspruch 6, wobei der Galliumvorläufer Galliumnitrat ist.

8. Verfahren nach einem der Ansprüche 5 bis 7, wobei die Molzusammensetzung des in den Schritten i) bis iii) erhaltenen Gemischs folgendermaßen variiert: 1 Mol Galliumvorläufer: 0,5 bis 3 Mol Terephthalsäure: 0 bis 1 Mol Fluorwasserstoffsäure: 100 Mol Wasser.

9. Verfahren nach einem der Ansprüche 5 bis 8, wobei das am Ende von Schritt iii) erhaltene Gemisch einer hydrothermischen Behandlung unterzogen wird bis die Kristallisation des Zwischenfeststoffs erhalten wird, wobei der Schritt zur Kristallisation zwischen der Umgebungstemperatur und 260 °C 12 bis 72 Stunden lang unter Druckbedingungen autogener Reaktion erfolgt.

10. Verfahren nach einem der Ansprüche 5 bis 9, wobei das Trocknen gemäß Schritt v) zwischen 20 und 200 °C für eine Dauer durchgeführt wird, die zwischen 1 bis 24 Stunden variiert.

11. Verfahren nach einem der Ansprüche 5 bis 10, wobei das Masseverhältnis zwischen dem polaren Lösemittel und dem rohen kristallisierten Synthesefeststoff, der im ersten Schritt a) der Aktivierungsbehandlung eingesetzt wurde, im Bereich zwischen 20 und 200 liegt.

12. Verfahren nach einem der Ansprüche 5 bis 11, wobei auf den Schritt a) Abkühlen auf eine Temperatur im Bereich zwischen der Umgebungstemperatur und 50 °C, dann Filtrieren und Trocknen der Suspension aus Schritt a) folgt, wobei das Trocknen bevorzugt bei einer Temperatur im Bereich zwischen 20 und 50 °C durchgeführt wird.

13. Verfahren nach einem der Ansprüche 5 bis 12, wobei das Masseverhältnis zwischen dem alkoholischen Lösemittel und dem in Schritt b) der Aktivierungsbehandlung eingesetzten Feststoff im Bereich zwischen 200 und 1.000 liegt.

14. Verfahren nach einem der Ansprüche 5 bis 13, wobei am Ende von Schritt b) der Aktivierungsbehandlung eine Suspension erhalten wird, die anschließend filtriert und bei einer Temperatur im Bereich zwischen der Umgebungstemperatur und 70 °C getrocknet wird.

15. Verwendung des Hybridmaterials nach einem der Ansprüche 1 oder 2, das durch das Verfahren nach einem der Ansprüche 5 bis 14 erhalten wurde, als Adsorptionsmittel oder als Katalysator.
